# EUROPÄISCHE PATENTSCHRIFT

(11) **EP 1 180 737 B1**
(45) Veröffentlichungstag und Bekanntmachung des Hinweises auf die Patenterteilung: **02.08.2006**
(21) Anmeldenummer: 01116170.0
(22) Anmeldetag: 04.07.2001
(51) Int. Cl.: G05G 5/18, B60N 2/08

(54) **Verstell-Vorrichtung**
Adjustment device
Dispositif de réglage

(30) Priorität: 12.08.2000 DE 10039501
(43) Veröffentlichungstag der Anmeldung: 20.02.2002
(73) Patentinhaber: GRAMMER AG, 92224 Amberg (DE)
(72) Erfinder: Raum, Holger, 92237 Sulzbach-Rosenberg (DE)
(74) Vertreter: LOUIS, PÖHLAU, LOHRENTZ

(56) Entgegenhaltungen:
- EP-A- 0 839 479
- DE-A- 4 321 720
- DE-A- 4 439 476

## Beschreibung

Die Erfindung betrifft eine Vorrichtung zum Verstellen eines Verstellkörpers mittels eines länglichen Betätigungselementes (siehe z.B. DE-A- 43 21 720).

Derartige Verstell-Vorrichtungen kommen beispielsweise bei Fahrzeugsitzen zur Anwendung, um die Sitzplatte des jeweiligen Fahrzeugsitzes in Bezug auf eine Grundeinrichtung wunschgemäß zu verstellen. Bei diesen Verstell-Vorrichtungen ist das längliche Betätigungselement von einer Schraubspindel und der Verstellkörper von einem Mutterelement gebildet, die selbsthemmend dimensioniert sind, um nach einer Verstellung, d.h. Drehung der Schraubspindel in die eine Drehrichtung eine ungewollte automatische Rückstellung, d.h. Drehung der Schraubspindel in die entgegengesetzte Richtung zu verhindern. Die Schraubspindel ist durch das Mutterelement durchgeschraubt. In Abhängigkeit von der jeweiligen Gewindesteigung der Schraubspindel und des Mutterelementes ist die Verstellung relativ zeitaufwendig.

Der Erfindung liegt die Aufgabe zugrunde, eine Verstell-Vorrichtung der eingangs genannten Art zu schaffen, die einfach ausgebildet ist, die eine geringe Bauhöhe besitzt, deren Betätigung einfach möglich ist, und mit der zeitsparend große Verstellwege realisierbar sind.

Diese Aufgabe wird bei einer Verstellvorrichtung der eingangs genannten Art erfindungsgemäß durch die Merkmale von Anspruch 1 gelöst.

Das längliche Betätigungselement ist zweckmäßigerweise als längliches Plattenelement gestaltet. Hierbei kann es sich um ein Stanzblechteil handeln.

Eine sehr einfache Ausbildung der Verstell-Vorrichtung ohne Lagerzapfen ergibt sich, wenn das längliche Betätigungselement an mindestens einem Längsrand voneinander beabstandet mit zwei kreisrunden Aussparungen ausgebildet ist, in welchen jeweils ein Ratschenelement mit einem kreisrunden Lagerabschnitt schwenkbeweglich gelagert ist. Eine derartige Ausbildung weist nicht nur den Vorteil auf, daß Lagerzapfen entbehrlich sind, sondern daß auch der Montageaufwand sehr klein ist, weil die Ratschenelemente mit ihre kreisrunden Lagerabschnitten quasi fliegend in den kreisrunden Aussparungen des länglichen Betätigungselementes schwenkbeweglich gelagert sind.

Bei der erfindungsgemäßen Verstellvorrichtung können an mindestens einem Längsrand des Betätigungselementes zwei Federelemente festgelegt sein, die gegen die zugehörigen Ratschenelemente gezwängt sind. Besonders vorteilhaft ist es, wenn die mindestens eine Linearverzahnung, das längliche Betätigungselement und das mindestens eine Paar Ratschenelemente einander mindestens annähernd entsprechende Dickenabmessungen aufweisen. Eine derartige Ausbildung resultiert in einer sehr kleinen Gesamtdicke der erfindungsgemäßen Verstell-Vorrichtung, so daß der Raum- bzw. Platzbedarf für die Verstell-Vorrichtung beispielsweise an einem Fahrzeugsitz in vorteilhafter Weise gering ist.

Die Federelemente sind zweckmäßigerweise als Blattfedern ausgebildet, die eine an die Ratschenelemente und das längliche Betätigungselement angepaßte Dickenabmessung aufweisen.

Besonders vorteilhaft ist es, wenn die Ratschenelemente am länglichen Betätigungselement mittels eines am Betätigungselement befestigten Deckblättchens geringer Wanddicke festgelegt sind, von dem die Federelemente als integrale Bestandteile wegstehen. Ein solches Deckblättchen mit integral wegstehenden Federelementen ist aus einem Federblech geringer Wanddicke durch Stanzen und Biegen einfach herstellbar. Auch der Montageaufwand zur Kombination der Federelemente mit den Ratschenelementen ist in vorteilhafter Weise klein.

Eine doppelt wirkende Linearratschen-Verstellvorrichtung, d.h. eine Verstellvorrichtung, bei welcher der Verstellkörper mit Hilfe des Betätigungselementes in die eine oder in die entgegengesetzte andere Richtung schrittweise ratschend linear verstellbar ist, ergibt sich, wenn das mindestens eine basisfeste Ausrastorgan für die Ratschenelemente an einem mittleren Längenabschnitt der ortsfesten Basis vorgesehen ist.

Unter den Gesichtspunkten einer gleichmäßigen Belastung bzw. Beanspruchung und Abnutzung der erfindungsgemäßen Verstellvorrichtung ist es bevorzugt, wenn der Verstellkörper zwei voneinander beabstandete und zueinander parallel orientierte Linearverzahnungen aufweist, zwischen welchen das längliche Betätigungselement von den beiden Linearverzahnungen gleich weit beabstandet vorgesehen ist, wenn an den beiden Längsrändern des Betätigungselementes jeweils ein Paar Ratschenelemente schwenkbeweglich gelagert sind, deren Ratschenzahnung mittels jeweils zugehöriger Federelemente gegen die entsprechende Linearverzahnung des Verstellkörpers gezwängt sind, und wenn zwischen jeder Linearverzahnung und dem zugehörigen Längsrand des Betätigungselementes jeweils ein basisfestes Ausrastorgan vorgesehen ist.

Mit der erfindungsgemäßen Verstell-Vorrichtung ist schrittweise ratschend, d.h. quasi pumpend, eine lineare Verstellung des Verstellkörpers in Bezug auf die ortsfeste Basis in einer Richtung oder in der entgegengesetzten anderen Richtung möglich. Diese Verstellung in die eine oder in die entgegengesetzte andere Richtung ist schnell, d.h. zeitsparend pumpend möglich. Die Gesamt-Bauhöhe der erfindungsgemäßen Verstellvorrichtung ist sehr klein und der Aufbau sowie die Montage der Verstell-Vorrichtung sind relativ einfach.

Weitere Einzelheiten, Merkmale und Vorteile ergeben sich aus der nachfolgenden Beschreibung eines in der Zeichnung dargestellten Ausführungsbeispieles der erfindungsgemäßen Verstell-Vorrichtung. Es zeigen:
- Figur 1: in einer Draufsicht wesentliche Teile der Verstell-Vorrichtung in einer Mittelposition - ohne Deckblättchen und somit ohne die integrale Bestandteile des Deckblättchens bildenden Federelemente,
- Figur 2: die Verstell-Vorrichtung gemäß Figur 1 in einer in Bezug zur ortsfesten Basis um einen bestimmten Verstellschritt vorverstellten Position,
- Figur 3: eine der Figur 1 ähnliche Darstellung, wobei jedoch auch das Deckblättchen mit den integralen Federelementen dargestellt ist,
- Figur 4: die Verstellvorrichtung gemäß Figur 3 in der in Figur 2 gezeichneten um einen bestimmten Verstellschritt vorverstellten Position, und
- Figur 5: eine räumliche Explosionsdarstellung der Verstell-Vorrichtung, jedoch ohne Darstellung der ortsfesten Basis und ohne Darstellung der zur ortsfesten Basis zugehörigen, d.h. basisfesten Ausrastorgane.

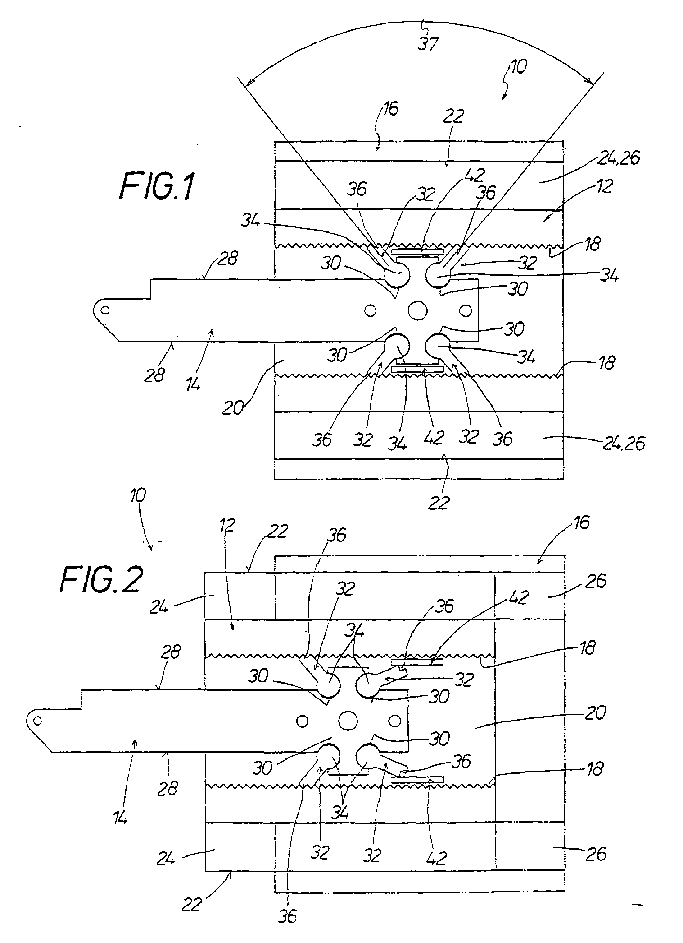

Figur 1 zeigt in einer Ansicht von oben wesentliche Teile einer Ausbildung der Verstellvorrichtung 10, die zum linearen, schrittweise ratschenden Verstellen eines Verstellkörpers 12 mittels eines länglichen Betätigungselementes 14 relativ zu einer ortsfesten Basis 16 vorgesehen ist. Eine solche Verstell-Vorrichtung 10 kommt beispielsweise bei einem Fahrzeugsitz zur Höhen- bzw. Gewichtseinstellung seiner Sitzplatte zur Anwendung. Dabei ist die Basis 16 mit dem Fahrzeugsitz fest verbunden oder Teil desselben. Der Verstellkörper ist in Bezug auf die Basis 16 ratschend schrittweise verstellbar. Am Verstellkörper 12 ist ein (nicht gezeichnetes) Federelement befestigt, das in Bezug auf die Basis 16 verstellt wird, um den Fahrzeugsitz auf das Gewicht des jeweiligen Sitzbenutzers optimal einzustellen.

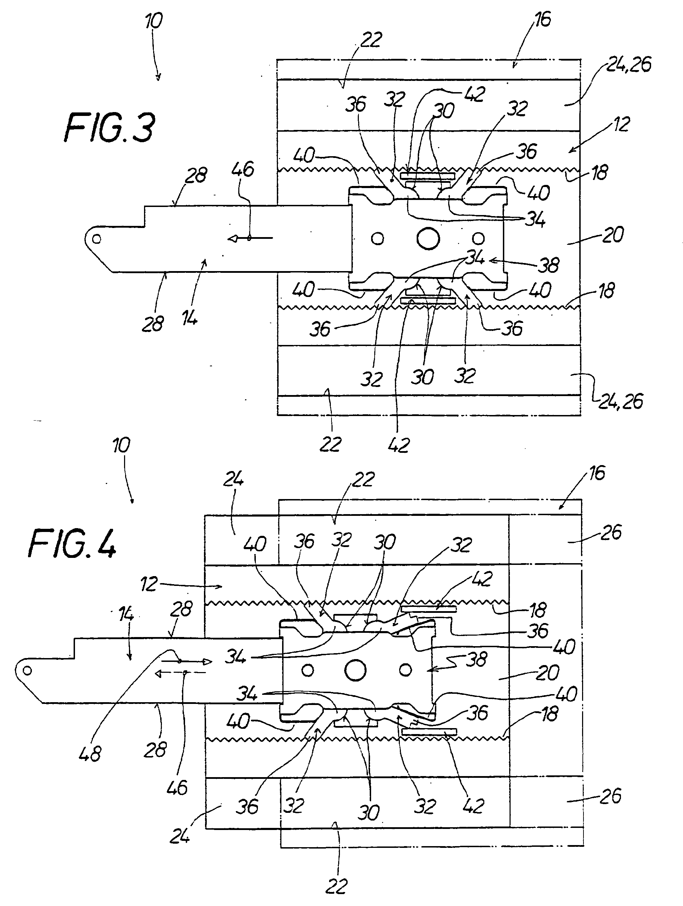

Wie ersichtlich ist, weist der Verstellkörper 12 zwei voneinander beabstandete und zueinander parallel orientierte Linearverzahnungen 18 auf. Die beiden Linearverzahnungen 18 stehen von einer Grundplatte 20 nach oben. Die Linearverzahnungen 18 sind von den beiden Längsrändern 22 der Grundplatte 20 gleich weit beabstandet, so daß sich zwischen den Linearverzahnungen 18 und den Längsrändern 22 Führungsrippen 24 ergeben, die in Führungsrinnen 26 der ortsfesten Basis 16 mit einer Gleitsitztoleranz hineinstehen (sh. die Figuren 2 und 4).

Das längliche Betätigungselement 14, bei dem es sich beispielsweise um ein Stanzblechteil handelt, weist eine Wanddicke auf, die an die Höhenabmessung der Linearverzahnungen 18 des Verstellkörpers 12 angepaßt bzw. geringfügig kleiner als diese ist. Das längliche Betätigungselement 14 ist an seinen beiden Längsrändern 28 jeweils mit zwei voneinander axial beabstandeten kreisrunden Aussparungen 30 ausgebildet. Die kreisrunden, zum jeweiligen Längsrand 28 hin offenen Aussparungen 30 dienen zur schwenkbeweglichen Lagerung von Ratschenelementen 32. Die Ratschenelemente 32 sind zu ihrer schwenkbaren Lagerung in den Aussparungen 30 mit kreisrunden Lagerabschnitten 34 ausgebildet. Die Lagerabschnitte 34 sind an die Aussparungen 30 mit einer Gleitsitztoleranz angepaßt. Die Ratschenelemente 32 weisen eine der Wanddicke des länglichen Betätigungselementes 14 entsprechende Wanddicke auf, sie sind jeweils mit einer Ratschenzahnung 36 ausgebildet. Die Ratschenzahnungen 36 sind an die Linearverzahnungen 18 des Verstellkörpers 12 formmäßig angepaßt.

Wie aus den Figuren 1 und 3 ersichtlich ist, schließen die der jeweiligen Linearverzahnung 18 des Verstellkörpers 12 zugeordneten beiden Ratschenelemente 32 in der neutralen Mittelposition der Verstell-Vorrichtung 10 miteinander einen definierten Öffnungswinkel ein, der in Figur 1 durch den bogenförmigen Doppelpfeil 37 verdeutlicht ist.

Am länglichen Betätigungselement 14 ist ein Deckblättchen 38 (sh. die Figuren 3, 4 und 5) befestigt, das aus einem Federblech besteht. Vom Deckblättchen 38 stehen einteilig Federelemente 40 weg. Im am Betätigungselement 14 befestigten Zustand des Deckblättchens 38 sind die Federelemente 40 federnd gegen die Ratschenelemente 32 gezwängt, wie aus den Figuren 3 und 4 ersichtlich ist. Mit Hilfe der Federelemente 40 werden die Ratschenelemente 32 also in der Neutralposition (sh. Figur 3) gegen die Linearverzahnungen 18 des Verstellkörpers 12 gezwängt. Wird das längliche Betätigungselement 14 um eine bestimmte Hubstrecke beispielsweise in Figur 3 nach links bewegt, was durch den Pfeil 46 angedeutet ist, so wird mit dem Betätigungselement 14 über die in Figur 3 auf der linken Seite des basisfesten Ausrastorganes 42 befindlichen Ratschenelemente 32 der Verstellkörper 12 um die gleiche Wegstrecke in Bezug auf die ortsfeste Basis 16 mitgenommen. Gleichzeitig werden die in Figur 3 auf der rechten Seite gezeichneten Ratschenelemente 32 durch die basisfesten Ausrastorgane 42 von den Linearverzahnungen 18 des Verstellkörpers 12 entfernt. Diese zuletzt genannten Ratschenelemente 32 werden an den basisfesten Ausrastorganen 42 entlangbewegt, wie aus Figur 4 ersichtlich ist. Diese Verstellstrecke 46 des Betätigungselementes 14 ist selbstverständlich nur so groß, daß die rechten Ratschenelemente 32 an den basisfesten Ausrastorganen 42 verbleiben. Anschließend wird das Betätigungselement 14 um die gleiche Strecke wieder zurückbewegt, was in Figur 4 durch den Pfeil 48 angedeutet ist. Hierbei bewegen sich die rechten Ratschenelemente 32 wieder an den basisfesten Ausrastorganen 42 zurück. Die beiden linken Ratschenelemente 32 führen hierbei entlang den Linearverzahnungen 18 eine ratschende Schwenkbewegung um ihre Lagerabschnitte 34 durch. Der Verstellkörper 12 führt hierbei keine Bewegung durch, weil er mit der ortsfesten Basis 16 reibschlüssig verbunden ist. Das Betätigungselement 14 wird wieder höchstens bis zu der in Figur 3 gezeichneten Neutralstellung zurückbewegt. Anschließend wird das Betätigungselement 14 wieder um den durch den Pfeil 46 gezeichneten Verstell- d.h. Vorschubhub nach vorne bewegt. Diese pumpende Vorwärts- und Rückwärtsbewegung kann wiederholt durchgeführt werden, um den Verstellkörper 12 in Bezug auf die ortsfeste Basis 16 schrittweise nach vorne zu verstellen. Entsprechend kann der Verstellkörper 12 ausgehend von der in Figur 3 gezeichneten Neutralstellung des Verstellkörpers 12 und des Betätigungselementes 14 auch in die zur Figur 4 entgegengesetzte Richtung, d.h. in Bezug auf die ortsfeste Basis 16, schrittweise nach rechts verstellt werden.

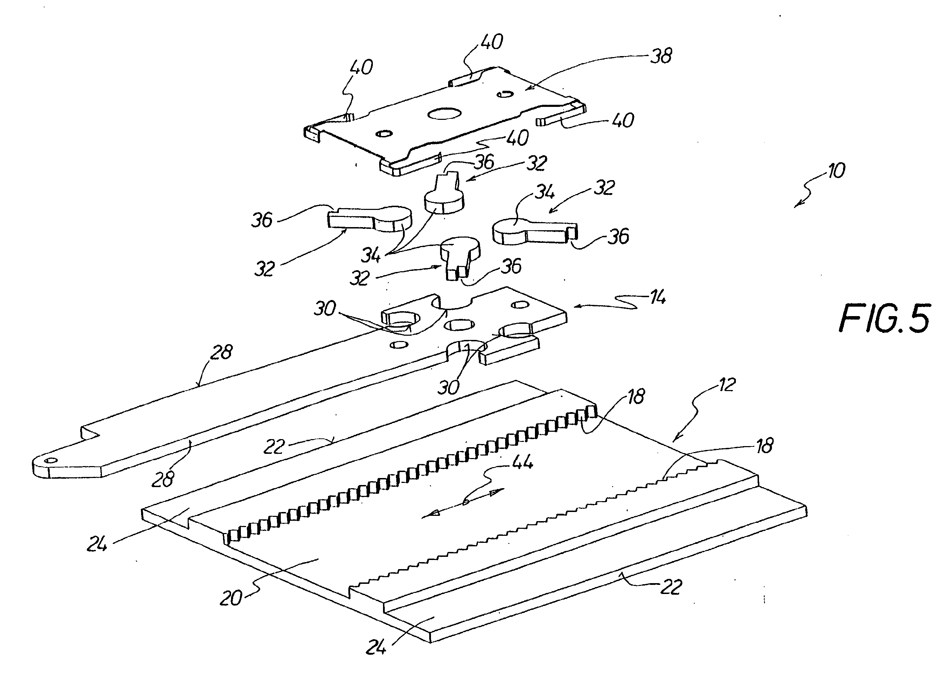

Mit Hilfe des länglichen Betätigungselementes 14 ist der Verstellkörper 12 also schrittweise in die eine oder in die andere Richtung linear verstellbar, was in Figur 5 durch den Doppelpfeil 44 verdeutlicht ist.

Die Ausrastorgane 42 der ortsfesten Basis 16 sind zwischen der jeweiligen Linearverzahnung 18 und dem davon beabstandeten zugehörigen Längsrand 22 des länglichen Betätigungselementes 14 vorgesehen, wie aus den Figuren 1 bis 4 ersichtlich ist. Die ortsfeste Basis überdeckt also beispielsweise den Verstellkörper 12 oberseitig, wobei die Ausrastorgane 42 nach unten stehen und in die Nachbarschaft der Linearverzahnungen 18 reichen.

Gleiche Einzelheiten sind in den Figuren 1 bis 5 jeweils mit denselben Bezugsziffern bezeichnet, so daß es sich erübrigt, in Verbindung mit allen Figuren alle Einzelheiten jeweils detailliert zu beschreiben.

## Patentansprüche

1. Vorrichtung zum Verstellen eines Verstellkörpers (12) mittels eines länglichen Betätigungselementes (14) entlang einer ortsfesten Basis (16),
wobei
der Verstellkörper (12) mindestens eine Linearverzahnung (18) aufweist, wobei ferner an mindestens einem Längsrand (28) des Betätigungselementes (14) zwei axial voneinander beabstandete Ratschenelemente (32) schwenkbeweglich gelagert sind, die miteinander einen Öffnungswinkel (37) einschließen und die mit an die Linearverzahnung (18) angepaßten Ratschenzahnungen (36) ausgebildet sind, wobei außerdem die Ratschenelemente (32) mittels Federelementen (40) gegen die Linearverzahnung (18) gezwängt sind, **dadurch gekennzeichnet, daß** zwischen der mindestens einen Linearverzahnung (18) und dem Betätigungselement (14) mindestens ein den jeweiligen linearen Verstell-Vorschubschritt in die eine oder in die entgegengesetzte andere Verstellrichtung bestimmendes basisfestes Ausrastorgan (42) für das jeweilige Ratschenelement (32) derart vorgesehen ist und ferner zwischen dem Verstellkörper (12) und der ortsfesten Basis (16) derartige Reibungsverhältnisse gegeben sind, daß das Betätigungselement (14) den Verstellkörper (12) mittels eines ersten der beiden Ratschenelemente (32) ratschend schrittweise in die jeweilige eine oder entgegengesetzte andere Verstellrichtung mitnimmt, in der zur jeweiligen Verstellrichtung entgegengesetzten Richtung der Verstellkörper (12) jedoch an der Basis (12) reibschlüssig festgelegt ist und nur das Betätigungselement (14) in Bezug auf den Verstellkörper (12) um den Verstell-Vorschubschritt ratschend zurückbewegt wird während hierbei das zweite der beiden Ratschenelemente (32) an dem Ausrastorgan (42) entlangbewegt wird.

2. Vorrichtung nach Anspruch 1,
**dadurch gekennzeichnet,**
**daß** das längliche Betätigungselement (14) an mindestens einem Längsrand (28) voneinander beabstandet mit zwei kreisrunden Aussparungen (30) ausgebildet ist, in welchen jeweils ein Ratschenelement (32) mit einem kreisrunden Lagerabschnitt (34) schwenkbeweglich gelagert ist.

3. Vorrichtung nach Anspruch 1 oder 2,
**dadurch gekennzeichnet,**
**daß** an mindestens einem Längsrand (28) des Betätigungselementes (14) zwei Federelemente (40) festgelegt sind, die gegen die zugehörigen Ratschenelemente (32) gezwängt sind.

4. Vorrichtung nach einem der Ansprüche 1 bis 3,
**dadurch gekennzeichnet,**
**daß** die mindestens eine Linearverzahnung (18), das längliche Betätigungselement (14) und das mindestens eine Paar Ratschenelemente (32) einander mindestens annähernd entsprechende Dickenabmessungen aufweisen.

5. Vorrichtung nach einem der Ansprüche 1 bis 4,
**dadurch gekennzeichnet,**
**daß** die Federelemente (40) als Blattfedern ausgebildet sind, die eine an die Ratschenelemente (32) und das längliche Betätigungselement (14) angepaßte Dickenabmessung aufweisen.

6. Vorrichtung nach einem der Ansprüche 1 bis 5,
**dadurch gekennzeichnet,**
**daß** die Ratschenelemente (32) am länglichen Betätigungselement (14) mittels eines am Betätigungselement (14) befestigten Deckblättchens (38) geringer Wanddicke festgelegt sind, von dem die Federelemente (40) als integrale Bestandteile wegstehen.

7. Vorrichtung nach einem der Ansprüche 1 bis 6,
**dadurch gekennzeichnet,**
**daß** das mindestens eine basisfeste Ausrastorgan (42) für die Ratschenelemente (32) an einem mittleren Längenabschnitt der ortsfesten Basis (16) vorgesehen ist.

8. Vorrichtung nach einem der Ansprüche 1 bis 7,
**dadurch gekennzeichnet,**
**daß** der Verstellkörper (12) zwei voneinander beabstandete und zueinander parallel orientierte Linearzahnungen (18) aufweist, zwischen welchen das längliche Betätigungselement (14) von den beiden Linearverzahnungen (18) gleich weit beabstandet vorgesehen ist, daß an den beiden Längsrändern (28) des Betätigungselementes (14) jeweils ein Paar Ratschenelemente (32) schwenkbeweglich gelagert sind, deren Ratschenzahnung (36) mittels jeweils zugehöriger Federelemente (40) gegen die entsprechende Linearverzahnung (18) gezwängt sind, und daß zwischen jeder Linearverzahnung (18) und dem zugehörigen Längsrand (28) des Betätigungselementes (14) jeweils ein basisfestes Ausrastorgan (42) für das entsprechende Ratschenelement (32) vorgesehen ist.

## Claims

1. Device for adjusting an adjusting element (12) along a positionally fixed base (16) by means of an elongate actuating element (14), the adjusting element (12) having at least one linear toothing (18), furthermore two ratchet elements (32) which are spaced apart axially from each other being mounted pivotably on at least one longitudinal edge (28) of the actuating element (14), enclosing an opening angle (37) with each other and being formed with ratchet toothings (36) which are matched to the linear toothing (18), and, in addition, the ratchet elements (32) being forced against the linear toothing (18) by means of spring elements (40), **characterized in that** at least one disengaging member (42) which is fixed on the base and determines the respective linear adjustment advancing step in the one or in the other, opposite adjustment direction is provided for the respective ratchet element (32) between the at least one linear toothing (18) and the actuating element (14) in such a manner, and furthermore frictional conditions are provided between the adjusting element (12) and the positionally fixed base (16) in such a manner, that the actuating element (14) carries along the adjusting element (12) by means of a first of the two ratchet elements (32) stepwise in a ratcheting manner in the respective one or other, opposite adjustment direction but, in the direction opposite to the respective adjustment direction, the adjusting element (12) is fixed frictionally on the base (12) and only the actuating element (14) is moved back with respect to the adjusting element (12) in a ratcheting manner by the adjustment advancing step while, in this case, the second of the two ratchet elements (32) is moved along the disengaging member (42).

2. Device according to Claim 1, **characterized in that** the elongate actuating element (14) is designed, on at least one longitudinal edge (28), with two circular cutouts (30), spaced apart from each other, in which a respective ratchet element (32) is mounted pivotably by a circular bearing section (34).

3. Device according to Claim 1 or 2, **characterized in that** two spring elements (40) which are forced against the associated ratchet elements (32) are fixed on at least one longitudinal edge (28) of the actuating element (14).

4. Device according to one of Claims 1 to 3, **characterized in that** the at least one linear toothing (18), the elongate actuating element (14) and the at least one pair of ratchet elements (32) have mutually at least approximately corresponding thickness measurements.

5. Device according to one of Claims 1 to 4, **characterized in that** the spring elements (40) are designed as leaf springs which have a thickness measurement matched to the ratchet elements (32) and the elongate actuating element (14).

6. Device according to one of Claims 1 to 5, **characterized in that** the ratchet elements (32) are fixed on the elongate actuating element (14) by means of a small covering leaf (38) of small wall thickness which is fastened to the actuating element (14) and from which the spring elements (40) protrude as integral components.

7. Device according to one of Claims 1 to 6, **characterized in that** the at least one disengaging member (42), which is fixed on the base and is intended for the ratchet elements (32), is provided on a central length section of the positionally fixed base (16).

8. Device according to one of Claims 1 to 7, **characterized in that** the adjusting element (12) has two linear toothings (18) which are spaced apart from each other and are oriented parallel to each other and between which the elongate actuating element (14) is provided spaced apart equally from the two linear toothings (18), **in that** a respective pair of ratchet elements (32) are mounted pivotably on the two longitudinal edges (28) of the actuating element (14), the ratchet toothing (36) of which ratchet elements are forced against the corresponding linear toothing (18) by means of respectively associated spring elements (40), and **in that** a respective disengaging member (42), which is fixed on the base and is intended for the corresponding ratchet element (32), is provided between each linear toothing (18) and the associated longitudinal edge (28) of the actuating element (14).

## Revendications

1. Dispositif pour le réglage d'un corps de réglage (12) au moyen d'un élément d'actionnement longitudinal (14) le long d'une base immobile (16), du type dans lequel le corps de réglage (12) présente au moins une denture linéaire (18), dans lequel, de plus, sur au moins un bord longitudinal (28) de l'élément d'actionnement (14) sont montés, mobiles en basculement, deux éléments formant cliquet (32) espacés l'un de l'autre, qui définissent l'un avec l'autre un angle d'ouverture (37), et qui sont réalisés avec des dentures de cliquet (36) adaptées à la denture linéaire (18), et dans lequel, en outre, les «éléments formant cliquet (32) sont repoussés contre la denture linéaire (18) au moyen d'éléments élastiques (40), **caractérisé en ce que**, entre chacune des dentures linéaires (18) et l'élément d'actionnement (14) est prévu, pour chaque élément formant cliquet (32), au moins un organe de dégagement (42), solidaire de la base et déterminant chaque pas d'avance du réglage, dans la direction de réglage ou dans la direction opposée, de chaque élément formant cliquet (32), tandis qu'au surplus, entre le corps de réglage (12) et la base immobile (16), sont établis des rapports de frottement, de telle sorte que l'élément d'actionnement (14) entraîne pas à pas par encliquetage le corps de réglage (12) au moyen de l'un des deux éléments formant cliquet (32), dans l'une des directions de réglage ou dans la direction opposée, dans laquelle, pour chaque direction opposée à la direction de réglage, le corps de réglage (12) est cependant solidaire par frottement de la base (16), et, seul l'élément d'actionnement (14) est rappelé par encliquetage d'un pas d'avance de réglage par rapport au corps de réglage (12), alors qu'ainsi, le second des deux éléments formant cliquet (32) est emmené contre l'organe de dégagement (42).

2. Dispositif selon la revendication 1, **caractérisé en ce que** l'élément d'actionnement longitudinal (14) présente, le long d'au moins un bord longitudinal (28), deux évidements arrondis (30) espacés l'un de l'autre, dans chacun desquels est monté, mobile en basculement, un élément formant cliquet (32), présentant une section de montage arrondie (34).

3. Dispositif selon l'une ou l'autre des revendications 1 ou 2, **caractérisé en ce que**, sur au moins un bord longitudinal (28) de l'élément d'actionnement (14), sont fixés deux éléments élastiques (40) qui sont repoussés contre les éléments formant cliquets (32) correspondants.

4. Dispositif selon l'une quelconque des revendications 1 à 3, **caractérisé en ce qu'**au moins une denture linéaire (18), l'élément d'actionnement (14) et au moins une paire d'éléments formant cliquets (32) présentent mutuellement des dimensions en épaisseur approximativement correspondantes.

5. Dispositif selon l'une quelconque des revendications 1 à 4, **caractérisé en ce que** les éléments élastiques (40) sont constitués par des ressorts à lame qui présentent une dimension en épaisseur adaptée aux éléments formant cliquets (32) et à l'élément d'actionnement longitudinal (14).

6. Dispositif selon l'une quelconque es revendications 1 à 5, **caractérisé en ce que** les éléments formant cliquets (32) sont fixés à l'élément d'actionnement (14) au moyen d'une plaquette de couverture (38) fixée à l'élément d'actionnement (14), d'une épaisseur de paroi inférieure, et d'où partent, sous forme de constituants en une seule pièce, les éléments élastiques (40).

7. Dispositif selon l'une quelconque des revendications 1 à 6, **caractérisé en ce qu'** il est prévu au moins un organe de dégagement solidaire de la base (42) pour les éléments formant cliquets (32) le long d'une section intermédiaire longitudinale de la base immobile (16).

8. Dispositif selon l'une quelconque des revendications 1 à7, **caractérisé en ce que** le corps de réglage (12) présente deux dentures linéaires (18) orientées parallèlement l'une par rapport à l'autre et espacées l'une de l'autre, entre lesquelles est prévu l'élément d'actionnement longitudinal (14), situé à distance égale des deux dentures linéaires (18), **en ce que**, sur chacun des deux bords longitudinaux (28) de l'élément d'actionnement (14) est montée, mobile en basculement une paire d'éléments formant cliquets (32), dont les dentures d'encliquetage (36) sont chacune repoussée contre la denture linéaire correspondante (18) au moyen d'éléments élastiques associés (40), et **en ce que**, entre chaque denture linéaire (18) et le bord longitudinal correspondant (28) de l'élément d'actionnement (14) est prévu un organe de dégagement (42) solidaire de la base pour l'élément formant cliquet (32) correspondant.
